# EUROPEAN PATENT SPECIFICATION

(11) **EP 2 116 852 B1**
(45) Date of publication and mention of the grant of the patent: **03.01.2018**
(21) Application number: 09158089.4
(22) Date of filing: 16.04.2009
(51) Int. Cl.: G01N 35/00

(54) **Automatic analyzer**
Automatisches Analysengerät
Analyseur automatique

(30) Priority: 17.04.2008 JP 2008107389
(43) Date of publication of application: 11.11.2009
(73) Proprietor: Hitachi High-Technologies Corporation, Tokyo 105-8717 (JP)
(72) Inventor: Ushiku, Emiko, Ibaraki 312-8504 (JP); Mimura, Tomonori, Ibaraki 312-8504 (JP)
(74) Representative: Puschmann Borchert Bardehle Patentanwälte Partnerschaft mbB

(56) References cited:
- EP-A2- 0 410 645
- DE-A1- 4 018 406
- JP-A- 5 232 123
- JP-A- 58 103 665
- US-A- 5 314 825
- US-A- 5 730 939
- US-A1- 2005 013 736
- US-A1- 2006 229 844
- US-A1- 2007 038 406

## Description

The present invention relates to an automatic analyzer for qualitatively and quantitatively analyzing a biological sample such as blood and urine, The invention more particularly relates to an automatic analyzer and an automatic analysis system, each of which has functions to easily perform a process for a series of operations including a special treatment to take for an unusual condition, a request for a re-measurement after the special treatment, and confirmation of the result of the re-measurement when an unusual condition attributable to the states of a sample or a reagent during analysis occurs.

A typical automatic analyzer receives a constant amount of a sample and a constant amount of a reagent, causes the sample and the reagent to react in a reaction vessel and measures absorbance or fluorescence, The automatic analyzer analyzes samples of patients in accordance with multiple analysis items and therefore uses multiple reagents to treat the samples. When samples of patients and reagents are set to the automatic analyzer and measurements are completed without any trouble during analyses, there is no special problem. However, the following unusual conditions may occur during the analyses since the analyses are clinical examinations.

### 1. Sample

- A taint, scratch or the like of a barcode, and a failure to read the barcode for the reason that the barcode is unclearly printed
- Detection of clogging of a sample probe due to a foreign material such as fibrin
- A lack of sample

### 2. Reagent

- A lack of reagent
- A new reagent for which calibration result is not known

These unusual conditions are not attributed to the automatic analyzer and are unavoidable as long as a routine measurement is performed in a clinical examination. Operations that are to be performed after occurrence of any of the unusual conditions are different from a normal routine operation.

For example, it is assumed that analyses are requested to be performed in accordance with fifteen analysis items for a certain sample and that clogging of a sample probe is detected during the analysis for the fifth item. In that case, the analyses for the subsequent analysis items for which measurement is to be performed will be interrupted. An operator extracts the sample from the automatic analyzer and removes a foreign material such as fibrin. Even if the operator wants to immediately resume the analysis for any of such analysis items, the analysis cannot be performed again using the same IDs since sample IDs will be duplicated during a period of time until results of the first four items for which sampling has been completed are output. Thus, the operator operates the automatic analyzer for the unusual condition, e.g., sets the sample from a general sample to an urgent sample or manually enters a virtual ID into the automatic analyzer. After that, the operator operates the automatic analyzer to cause the automatic analyzer to perform a re-measurement on the sample. The result of the re-measurement is reported without being distinguished from the result of a measurement performed in the normal routine operation.

JP-A-8-262031 discloses an automatic analyzer that displays an identification of the occurrence of an unusual condition during such an analysis in accordance with the degree of emergency.

According to US 5 314 825 A an automatic chemical analyzer includes a turntable adapted to hold a plurality of disposable cuvettes. An optical system adjacent to the turntable can perform analytical absorbance or fluorescence tests on the contents of each cuvette as they are rotated on the turntable. A sample/reagent tray is rotatably mounted about an axis parallel to the turntable axis. A common probe arm pivoted about a third parallel axis mounts a pipette that can be moved along an arcuate path intersecting a cuvette access station on the turntable and at least one container access station on the sample/reagent tray for transferring liquids as required by specific test procedures. A sample tube entry port is provided to support individual draw tubes that are manually delivered to the analyzer at a sample access station and to facilitate removal of samples by the pipette without exposing operating personnel to accidental contact with liquid materials in the draw tube.

US 5 730 939 A discloses an automatic analyzer in which abnormalities of reagents and samples used are displayed. Abnormalities are displayed in the form of a list which is composed of an alarm colored display table and an alarm detailed table. With respect to the alarm colored display, alarms which have occurred in reagents, standard solutions and control analytes in each analytic item are displayed in the form of a list so as to be classified by colors. With respect to the alarm detailed table, analytic information concerning abnormality of reagent, abnormality of standard solution, abnormality of control analyte, number of analyses, term of validity, alarm, etc. and information concerning the kind of reagent, the kind of standard solution, the kind of control analyte, the setting position, etc. which will be newly required for analysis in the future now are displayed.

JP 5 232 123 A is directed to detect the abnormal data caused by patient's disease separately from the abnormal data caused by the abnormality of an apparatus by performing the data measurement for a plurality of kinds and overall judgment by one analysis. For this purpose, cross-checking logics among items over a plurality of kinds are inputted from a keyboard 9 of an operating part. The samples of the plural kinds of the same patient are set at the determined position of one sample rack, to which the barcode label of the patient's ID number is attached. The rack is set in a rack containing part. The bar code is read out at the time of conveyance. Thereafter, the data, which are measured in an analyzing part, are transferred into the memory in a CPU of an operating part and temporally stored. The measured data are retrieved with the patient's number from the specimen, for which all measured data of the items of a plurality of the kinds required for the check with the above described logics are arranged. Then the checking is executed.

According to DE 40 18 406 A1, measurement data are entered and tested for error. The priority sequence of each test result is determined. The testing process comprises a reaction process test using time-series data for each trial, a system alarm test using an alarm originally from the analyse system and a cross-section test beyond the trials using the arrangement of the data from a number of trials. The data from the analysis system are pref. stored. The testing process includes a step for recording, changing and extinguishing a logic decision element used for each trial.

US 2007/0038406 discloses an analyzing system, comprising: a sample processor for processing a sample based on a designated dilution parameter; a measurement section for measuring the sample processed by the sample processor; a dilution parameter memory for storing a first dilution parameter and a second dilution parameter which is different from the first dilution parameter and can be supplied by a user of the analyzing system; and a measurement controller for controlling the sample processor and the measurement section so as to process the sample based on the first dilution parameter and obtain a measurement value by measuring the processed sample; wherein, when a comparison of the measurement value and a predetermined threshold indicates a retest, the second dilution parameter is used for the retest, is disclosed. A diagnostic processing device and computer program product thereof are also disclosed.

The contents of a treatment to be performed for an unusual condition are complicated as described above and are entrusted to the operator. Thus, the operator may erroneously enter data and perform erroneous operation. Even when such an error is found, the conventional technique cannot trace why and where the error took place.

In addition, it is a cumbersome task to search samples one by one for finding a sample subjected to a special treatment to take for an unusual condition and confirm measurement results of the samples.

When an unusual condition attributable to the states of a sample or a reagent occurs, the operator understands the status of the automatic analyzer, identifies and deals with the cause of the unusual condition, and performs a series of tasks for re-measurement. In the course of the process, the automatic analyzer may be stopped and restarted whereas only the sample or a part of items is problematic and the automatic analyzer may not need to be stopped. In order to treat only a specific sample, the operator extracts the sample from the automatic analyzer and performs troubleshooting in order to introduce a special treatment to take for an unusual condition into a normal operation (normal treatment to be performed by the automatic analyzer) of the automatic analyzer. A typical introduction method used is to measure the sample as an urgent sample.

The special treatment for such an unusual condition is different from a routine operation and complicated. Thus, the operator may erroneously enter data and erroneously operate the automatic analyzer. Even when such an error is found, the conventional technique cannot trace why and where the error took place. In addition, the result obtained through the special treatment is reported without being distinguished from the result of a measurement performed in the normal routine operation. Thus, it is a cumbersome task to search samples one by one for finding a sample subjected to a special treatment for such an unusual condition and confirm measurement results of the samples.

An object of the present invention is to provide an automatic analyzer and automatic analysis system, each of which is capable of being rapidly handled when an unusual condition occurs and ensuring traceability during a treatment for the unusual condition.

For this purpose, the automatic analyser of the invention comprises the features of claim 1. Preferred embodiments of the invention are characterized in the sub-claims.

When a lack of reagent, clogging of a sample probe, a failure in reading a barcode, a lack of sample, a calibration error, or a quality control error occurs or the reagent is expired during a measurement performed for a certain analysis item, an analysis for the analysis item is regarded as a failure. In order to perform the analysis for the analysis item, it is necessary to request a re-analysis with a measurement number (sequence number) changed and with a sample ID and a patient ID unchanged or to request a re-analysis with a sample ID and a patient ID changed as another sample. When the result of the sample thus measured is displayed on the basis of sample IDs and patient IDs, the analysis result is displayed as if the result of the sample was that of another sample. Thus, the re-analysis result cannot be determined to be either the result of a re-measurement performed due to an error or the initial measurement result. This problem is addressed by the automatic analyzer according to the present invention.

The operator does not need to stop the automatic analyzer during a process for a series of operations to understand the status of the automatic analyzer, identify and deal with the cause of the unusual condition and perform a re-measurement. In order to treat only a sample accompanied by an unusual condition, the operator handles the sample and operates the automatic analyzer in order to introduce a special treatment to take for an unusual condition into a normal operation (normal treatment to be performed by the automatic analyzer) of the automatic analyzer. A process that is performed on the sample subjected to the special treatment can be clarified separately from that performed on the sample subjected to the normal treatment.

In order to clarify the process that is performed on the sample subjected to the special treatment, the following functions are required.
1. The automatic analyzer has the following screens required when an unusual condition occurs.
   (1) Dedicated special treatment trace screen that displays contents of a process for an unusual condition
   (2) Dedicated re-measurement request screen that is used to restart an analysis after an occurrence of an unusual condition
   (3) Dedicated measurement result screen that displays the result of a measurement of a sample subjected to a special treatment to take for an unusual condition and is used to confirm and approve the measurement result
2. A sample subjected to a special treatment to take for an unusual condition is measured through troubleshooting by an operator. Thus, a process that is to be performed before the measurement is different from a process that is to be performed on a normal sample. It is necessary that the measurement result of the sample subjected to the special treatment be confirmed and approved. Thus, an entrance and exit for the sample subjected to the special treatment are different from those for a sample subjected to the normal treatment. The entrance means an entrance of the data base, while the exit means an exit of the data base. The entrance and the exit vary depending on whether or not the sample is subjected to a special treatment to take for an unusual condition. The automatic analyzer has a database dedicated for a sample subjected to a special treatment for an unusual condition to manage a measurement process.
3. The automatic analyzer records contents of an unusual condition, a sample number after a special treatment for an unusual condition, a sample ID, a setting position, a measurement item, a measurement result and the like in the database dedicated for a sample accompanied by an unusual condition in order to ensure traceability.
4. The automatic analyzer has a function of guiding a process for each unusual condition in order to clarify a method for coping with the unusual condition.
5. The automatic analyzer has a function of adding a mark to the measurement result based on the type of an unusual condition in order to identify the measurement result.

The operator copes with an unusual condition in accordance with a guidance displayed for each cause of the unusual conditions on the re-measurement request screen to reduce the risk of an error in operation. The measurement result of a sample subjected to the special treatment for the unusual condition is stored in a database different from a database storing measurement results of normally treated samples and displayed on the dedicated measurement result screen, which improves operability of the automatic analyzer. In addition, a process for confirmation and approval by an administrator is performed. Thus, only the measurement result of a sample subjected to a special treatment to take for an unusual condition, which is confirmed and approved by the administrator, can be reported to an external computer. Furthermore, the automatic analyzer ensures traceability by recording the contents of the special treatment.

Further advantages and possible applications of the present invention become apparent from the following detailed description with reference to the amplifying embodiments illustrated by way of example in the drawings.

In the description, the appended claims, the abstract and in the drawings, use is made of the terms and corresponding reference numerals summarized in the list of reference signs. In the drawings is shown:
- Fig. 1: a block diagram showing an automatic analyzer according to an embodiment of the present invention;
- Fig. 2: a work flow of the automatic analyzer according to the embodiment of the present invention;
- Fig. 3: a diagram showing a measurement result screen that is dedicated for a sample subjected to a special treatment to take for an unusual condition and is included in the automatic analyzer according to the embodiment of the present invention;
- Fig. 4: a diagram showing a re-measurement request screen that is dedicated for a sample subjected to a special treatment to take for an unusual condition and is included in the automatic analyzer according to the embodiment of the present invention;
- Fig. 5: a diagram showing a special treatment trace screen that is dedicated for a sample subjected to a special treatment to take for an unusual condition and is included in the automatic analyzer according to the embodiment of the present invention;
- Fig. 6: a flow of a process performed by the automatic analyzer according to the embodiment of the present invention when a failure to read a barcode for a sample occurs;
- Fig. 7: a flow of a process performed by the automatic analyzer according to the embodiment of the present invention when a sample is insufficient;
- Fig. 8: a flow of a process performed by the automatic analyzer according to the embodiment of the present invention when a sample probe is clogged and a foreign material is successfully removed from the sample probe;
- Fig. 9: a flow of a process performed by the automatic analyzer according to the embodiment of the present invention when a sample probe is clogged and removal of a foreign material from the sample probe fails, and
- Fig. 10: a flow of a process performed by the automatic analyzer according to the embodiment of the present invention when a reagent is insufficient.

An embodiment of the present invention is described below with reference to the accompanying drawings.

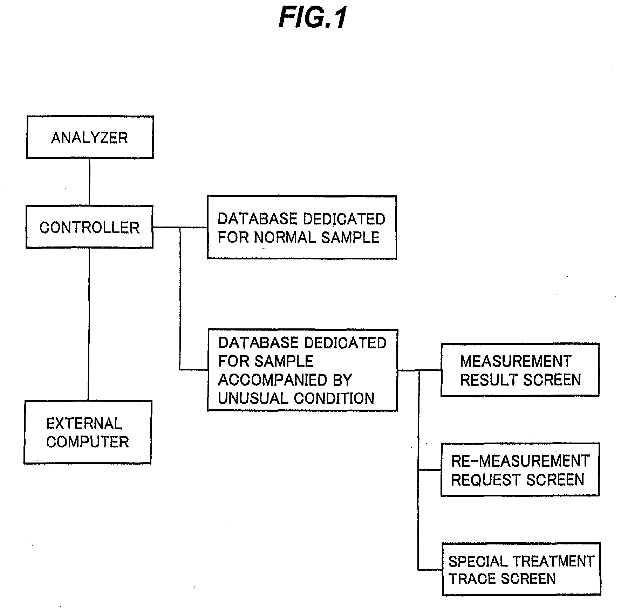

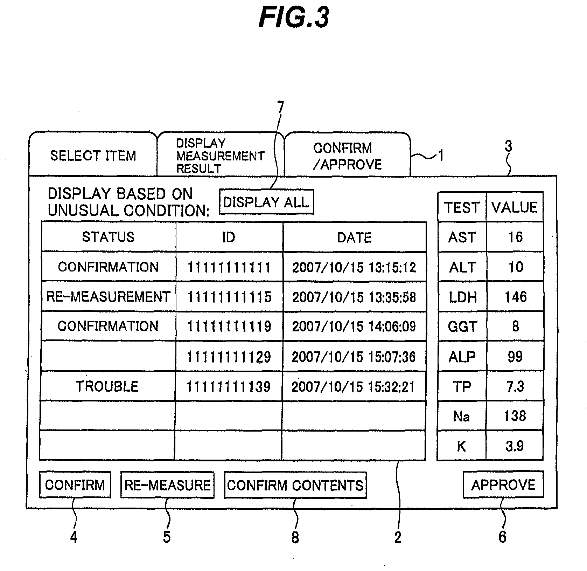

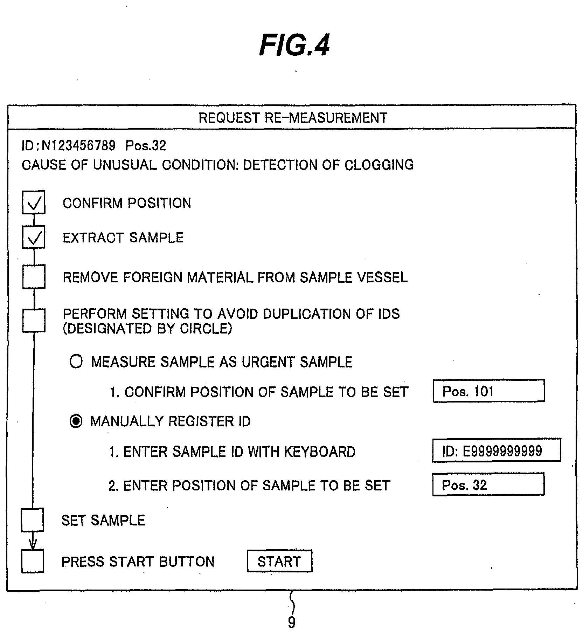

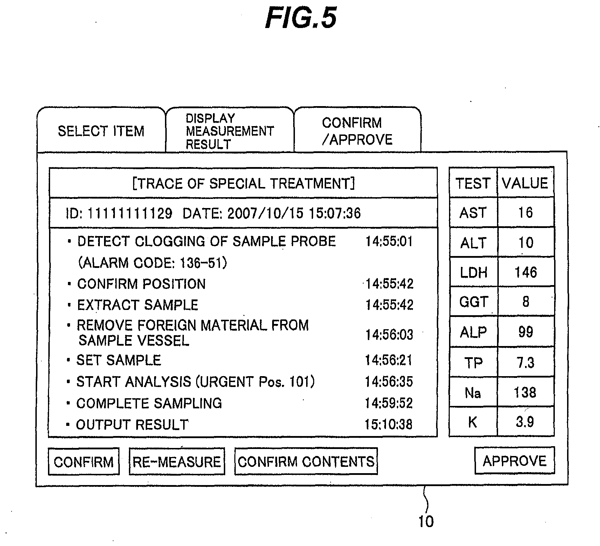

An automatic analyzer according to the embodiment of the present invention has a data processor. The data processor is described below with reference to Fig. 1. The automatic analyzer according to the embodiment includes an analyzer and a controller (storage mechanism). The controller is connected with an external computer. The controller is adapted to transmit and receive measurement request information and a measurement result to and from the external computer. The controller has a database dedicated for a normal sample and a database dedicated for a sample accompanied by an unusual condition. The database dedicated for a normal sample is used to manage a sample normally treated. The database dedicated for a sample accompanied by an unusual condition is used to manage a sample subjected to a special treatment for an unusual condition. The database dedicated for a sample accompanied by an unusual condition includes data on the following three screens: a measurement result screen; a re-measurement request screen; and a special treatment trace screen. The three screens are used only for samples subjected to a special treatment performed for unusual conditions. The measurement result screen is denoted by reference numeral 1 shown in Fig. 3. The re-measurement request screen is denoted by reference numeral 9 shown in Fig. 4. The special treatment trace screen is denoted by reference numeral 10 shown in Fig. 5.

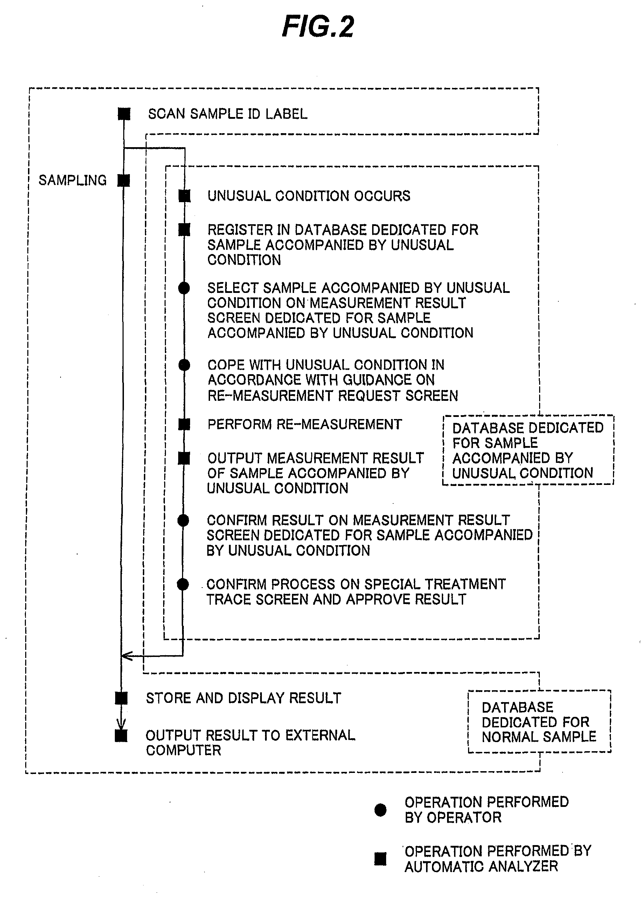

The outline of a work flow of the automatic analyzer is described with reference to Fig. 2. An operator sets samples to the automatic analyzer and presses a start button of the automatic analyzer. Then, the automatic analyzer automatically scans an identification (ID) label of the sample and samples the sample. The automatic analyzer then outputs the results of the scanning and the sampling. The output results are stored in the database dedicated for a normal sample, displayed on a screen and output to a printer and the external computer. These operations are collectively regarded as a routine operation.

In contrast, when an unusual condition occurs (for example, when a reagent is not sufficient, or the sample is stuck, or a barcode is not correctly read), the operator understands the status of the automatic analyzer, identifies and deals with the cause of the unusual condition, and performs a series of handling for re-measurement. In the case where the sample accompanied by the unusual condition is treated without a suspension of the automatic analyzer in this process, the operator handles the sample and operates the automatic analyzer in order to introduce a special treatment to take for an unusual condition into a normal operation (normal treatment that is to be performed by the automatic analyzer) of the automatic analyzer.

The sample in question is registered in the database dedicated for a sample subjected to a special treatment and displayed on the dedicated measurement result screen 1. The operator selects the corresponding sample on the measurement result screen 1 and opens the dedicated re-measurement request screen 9. After that, the operator instructs the automatic analyzer to perform a re-measurement in accordance with a guidance displayed on the re-measurement request screen 9. The result of the re-measurement is displayed on the measurement result screen 1. The operator confirms the result of the re-measurement on the measurement result screen 1. In addition, an administrator approves the result of the re-measurement. In this case, the administrator can confirm the contents of the special treatment in chronological order by opening the special treatment trace screen 10. Therefore, the sample subjected to a special treatment can be handled as a normal sample through the confirmation and the approval. The result of the sample subjected to a special treatment handled as the normal sample is transferred into the database dedicated for a normal sample and output to the external computer.

Next, the measurement result screen 1, the re-measurement request screen 9 and the special treatment trace screen 10, which are dedicated for a sample accompanied by an unusual condition, are described below.

Fig. 3 shows the measurement result screen 1 dedicated for a sample accompanied by an unusual condition. The measurement result screen 1 has a status field. A sample that cannot be completely measured due to an occurrence of an alarm (generated due to, for example, a lack of reagent, a clogged sample probe, or a failure to read a barcode) is registered in the measurement result screen 1. The status field for the sample that cannot be completely measured indicates "trouble". In order to re-measure the sample in question, a re-measurement button 5 is pressed to open the re-measurement request screen 9 shown in Fig. 4. The re-measurement request screen 9 displays an ID attached to a sample accompanied by an unusual condition, the position of the sample and the cause of the unusual condition. The re-measurement request screen 9 shows procedures required to be performed by the operator before the re-measurement. The procedures are displayed for each of causes of unusual conditions in a flow format. The operator operates the automatic analyzer in accordance with a guidance displayed on the re-measurement request screen 9 to cause the analyzer to perform each operation. When the operator presses a checkbox, the time when an operation indicated by the checkbox is performed is recorded in the automatic analyzer. When the operator finally presses a start button, the re-measurement is performed. The result of the re-measurement is displayed on the measurement result screen 1 shown in Fig. 3. The operator confirms a measured value for each of samples subjected to a special treatment. When there is no problem with the measured values, the operator presses a confirmation button 4. The administrator approves the confirmed results. Then, the confirmed results are transferred into the database dedicated for a normal sample and output to the external computer in real time or collectively. A process for entering a user ID and pass word of a person who confirms the measured results or entering a user ID and pass word of a person who approves the measured results may be performed to confirm and approve each sample. When the operator presses a content confirmation button 8 in order to confirm and approve the measured results, the special treatment trace screen 10 shown in Fig. 5 is displayed. Contents of the special treatment are displayed in chronological order on the special treatment trace screen 10.

Detail examples are described below for each of causes of unusual conditions.

### (1) In the case where an error in reading a barcode indicative of a sample ID occurs

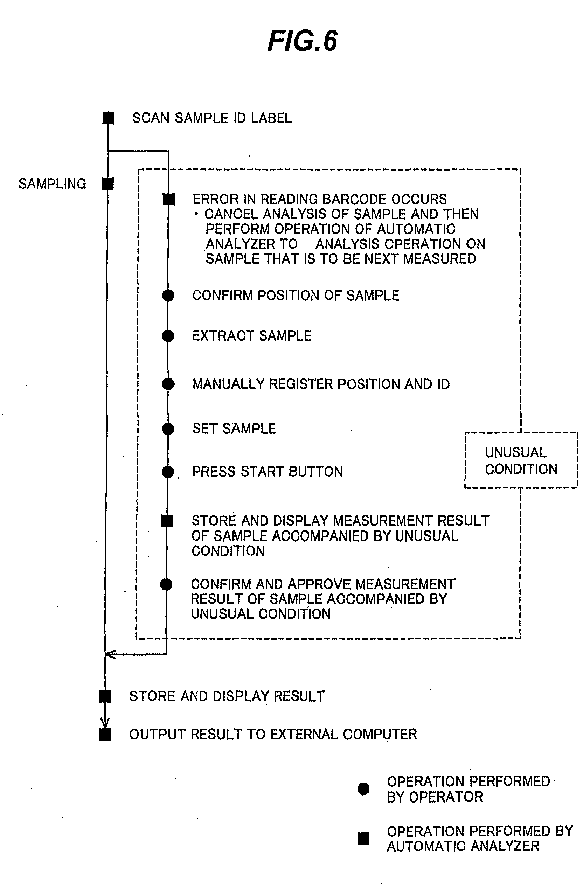

Fig. 6 is a flow of a process that is to be performed in the case (1). An ID label of a sample set in a disk or rack is scanned by a barcode reader. When the barcode reader cannot read the sample ID label due to a taint, scratch or the like of the label, the automatic analyzer generates an alarm indicative of an error in reading the barcode for the sample and cancels an analysis of the sample. In this case, only the sample for which the alarm is generated is required to be treated. Thus, the automatic analyzer does not need to be stopped. The operator handles the sample and operates the automatic analyzer to introduce a special treatment to take for an unusual condition (referred to as special treatment) into the normal operation of the automatic analyzer.

The sample treated in the case (1) is registered in the measurement result screen 1 dedicated for a sample accompanied by an unusual condition. The status field for the sample treated in the case (1) indicates "trouble". The operator selects the sample treated in the case (1) on the measurement result screen 1 and presses the re-measurement button 5. Then, the re-measurement request screen 9 is displayed. The re-measurement request screen 9 shows items (shown in Fig. 6) of operations in a flow format. The items of the operations are to be performed by the operator or to be performed by the automatic analyzer. The operator extracts the sample in accordance with the guidance, and performs troubleshooting (manual registration of the position and ID of the sample and the like). The sample subjected to the troubleshooting is reset to the automatic analyzer and measured by the automatic analyzer.

The results of the measurement are output and stored in the database for a sample accompanied by an unusual condition, This database dedicated is different from the database that is dedicated for a normal sample and designed to store a sample normally treated. The results are displayed on the measurement result screen 1. The operator selects a target sample and confirms a measured value of the target sample for each item. After that, when the operator presses the confirmation button 4, the status field for the sample indicates "confirmation". When the sample is required to be re-measured, the operator needs to press the re-measurement button 5. When the operator confirms samples subjected to all operations of the special treatment and then presses an approval button 6, data on the samples are erased from the screen 1, transferred into the database dedicated for a normal sample and output to the external computer in real time or collectively. The automatic analyzer records therein operations of the special treatment (shown in Fig. 6) and times when the operations are performed. In this case, the automatic analyzer records therein the operations and the times by using, as a trigger, the generation of the alarm indicative of the error in reading the barcode. Thus, the automatic analyzer can trace contents of the special treatment.

In the flow shown in Fig. 6, the result of the measurement of the sample subjected to the special treatment is displayed on the dedicated measurement result screen 1. The operator does not need to search a sample subjected to the auxiliary treatment from a lot of samples, Thus, the search performance can be improved. Since the processes for confirmation and approval by the administrator are performed, only approved measured results can be output to the external computer among measured results of samples subjected to the special treatment. By displaying the recorded operations of the special treatment and the recorded times on the special treatment trace screen 10 in order to confirm and approve the measured results, contents of the special treatment can be confirmed in chronological order on the special treatment trace screen 10.

### (2) In the case where an alarm indicative of a lack of sample is generated

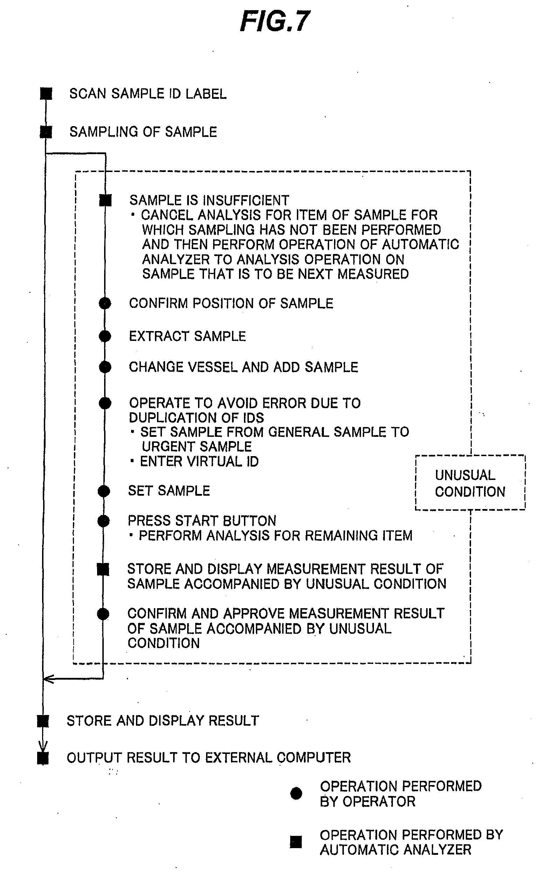

Fig. 7 shows a flow of a process that is to be performed in the case (2). When a remaining amount of a sample is reduced during sampling of the sample, the automatic analyzer adds an alarm indicative of a lack of the sample to an item of the sample for which sampling has not been performed. In this case, an analysis for an item indicative of already-performed sampling continues to be performed. In contrast, an analysis for a remaining item whose sampling has not been performed is cancelled. The automatic analyzer then performs an analysis operation on a sample that is to be next measured. In this case, only the sample for which the alarm indicative of a lack of sample is generated is required to be treated. Thus, the automatic analyzer does not need to stop, The operator handles the sample and operates the automatic analyzer to introduce a special treatment into the normal operation of the automatic analyzer.

The sample treated in the case (2) is registered in the measurement result screen 1. The status field for the sample treated in the case (2) indicates "trouble". The operator selects the sample treated in the case (2) on the measurement result screen 1 and presses the re-measurement button 5. Then, the re-measurement request screen 9 is displayed. The re-measurement request screen 9 shows items (shown in Fig. 7) of operations in a flow format. The items of operations are to be performed by the operator or to be performed by the automatic analyzer. The operator extracts the sample from the automatic analyzer in accordance with the guidance. After that, the operator replaces a sample vessel with another sample vessel and adds a sample to the replaced sample vessel. Even if the operator wants to immediately resume the analysis for any of such analysis items, the analysis cannot be performed again using the same IDs since sample IDs will be duplicated during a period of time until results of the items for which sampling has been completed are output. A re-measurement cannot be performed using the same IDs. Therefore, the operator sets the sample from a general sample to an urgent sample or manually enters a virtual ID or the like on the dedicated re-measurement request screen 9 to avoid the duplication of the IDs. After that, the re-measurement is performed.

The results of the re-measurement are output and stored in the database dedicated for a sample accompanied by an unusual condition. This database is different from the database that is dedicated for a normal sample and designed to store a sample normally treated. The output results are displayed on the measurement result screen 1. The results of the measurement of the sample, which are confirmed and approved by the administrator, are transferred into the database dedicated for a normal sample and output to the external computer in real time or collectively. The automatic analyzer records unusual conditions shown in Fig. 7 such as contents of the alarm and screen operations performed to avoid the duplication of the IDs by using, as a trigger, the generation of the alarm indicative of the lack of the sample. Then, the recorded unusual conditions are displayed on the special treatment trace screen 10.

In the flow shown in Fig. 7, the performance for searching a sample subjected to the special treatment is improved in a similar way to the aforementioned example. In addition, reliability of the automatic analyzer is improved due to the processes for the confirmation and approval. Furthermore, traceability of the automatic analyzer is ensured by recording the contents of the special treatment for the unusual condition.

### (3) In the case where an alarm indicative of detection of clogging of a sample probe is generated and a foreign material is removed from the sample probe by a cleaning operation

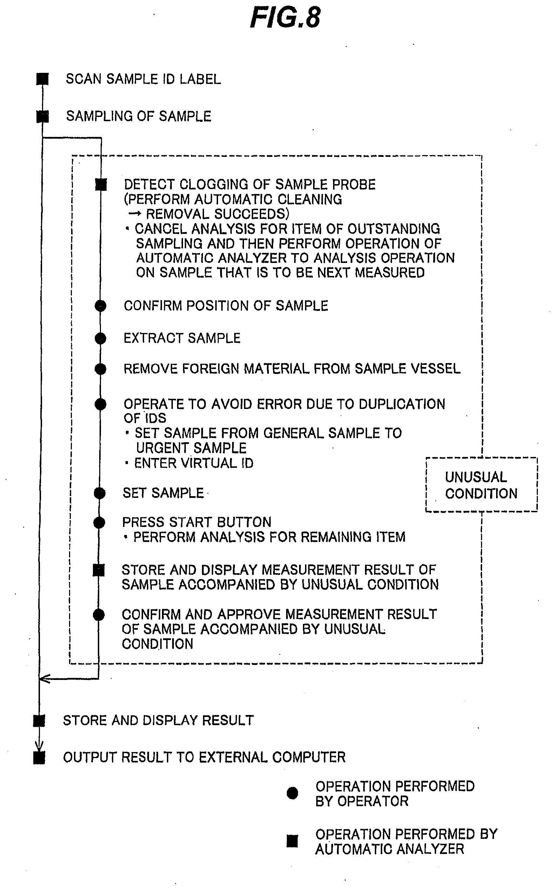

Fig. 8 shows a flow of a process that is to be performed in the case (3). When the sample probe is clogged due to a foreign material such as fibrin during sampling of a sample, the automatic analyzer adds an alarm indicative of detection of the clogging to an item of the sample for which sampling has not been performed. In this case, an analysis for an item for a sampled sample continues to be performed. In contrast, an analysis for a remaining item whose sampling has not been performed is cancelled, and the process proceeds to the cleaning operation. When the foreign material can be removed from the sample probe by the automatic cleaning operation, the automatic analyzer then performs an analysis operation on a sample that is to be next measured. In this case, only the sample for which the alarm indicative of detection of clogging of the sample probe is generated is required to be treated. Thus, the automatic analyzer does not need to stop. The operator handles the sample and operates the automatic analyzer to introduce a special treatment into the normal operation of the automatic analyzer.

The sample treated in the case (3) is registered in the measurement result screen 1, and the status field for the sample treated in the case (3) indicates "trouble". The operator selects the sample treated in the case (3) on the measurement result screen 1 and presses the re-measurement button 5. Then, the re-measurement request screen 9 is displayed. The re-measurement request screen 9 shows items (shown in Fig. 8) of operations in a flow format. The items of operations are to be performed by the operator or to be performed by the automatic analyzer. The operator extracts the sample in accordance with the guidance, and removes the foreign material (such as fibrin) from a sample vessel. Even if the operator wants to immediately resume the analysis for any of such analysis items, the analysis cannot be performed again using the same IDs since sample IDs will be duplicated during a period of time until results of the items for which sampling has been completed are output. A re-measurement cannot be performed using the same IDs. Therefore, the operator sets the sample from a general sample to an urgent sample or manually enters a virtual ID or the like on the dedicated re-measurement request screen 9 to avoid the duplication of the IDs. After that, the re-measurement is performed.

The results of the re-measurement are output and stored in the database dedicated for a sample accompanied by an unusual condition. This database is different from the database that is dedicated for a normal sample and designed to store a sample normally treated. The output results are displayed on the measurement result screen 1. The results of the measurement of the sample, which are confirmed and approved by the administrator, are transferred into the database dedicated for a normal sample and output to the external computer in real time or collectively. The automatic analyzer records therein unusual conditions shown in Fig. 8 such as contents of the alarm and screen operations performed to avoid the duplication of the IDs by using, as a trigger, the generation of the alarm indicative of detection of clogging of a sample probe. Then, the recorded unusual conditions are displayed on the special treatment trace screen 10. Data on a sample that is to be measured next to the sample detected to be clogged can be preset to be automatically stored in the database dedicated for a sample subjected to a special treatment.

In the flow shown in Fig. 8, the performance for searching a sample subjected to the special treatment is improved in a similar way to the aforementioned examples. In addition, reliability of the automatic analyzer is improved due to the processes for the confirmation and approval. Furthermore, traceability of the automatic analyzer is ensured by recording the contents of the special treatment for the unusual condition.

### (4) In the case where the alarm indicative of detection of clogging of a sample probe is generated and a foreign material cannot be removed from the sample probe by the cleaning operation

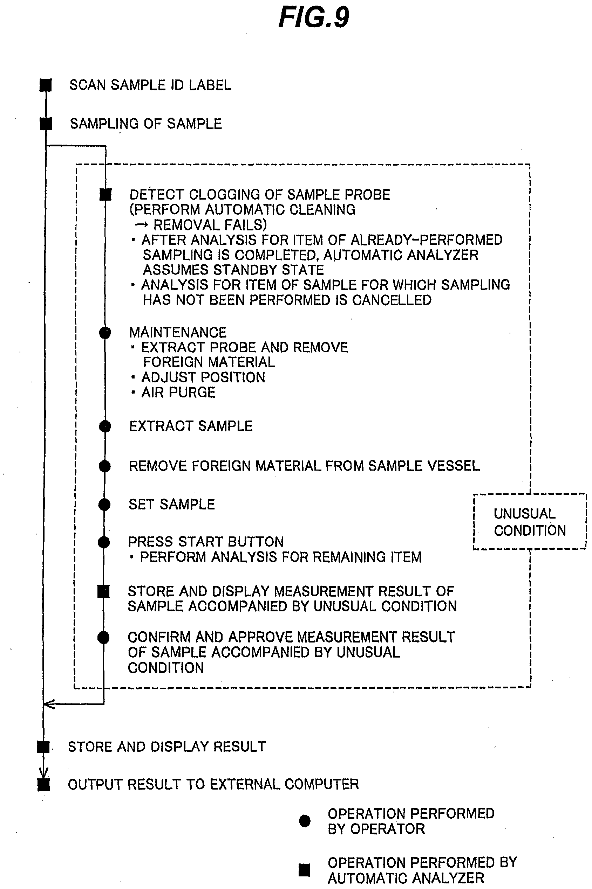

Fig. 9 shows a flow of a process that is to be performed in the case (4). When the sample probe is clogged due to a foreign material such as fibrin during sampling of a sample, the automatic analyzer adds the alarm indicative of detection of clogging of the sample probe to an item of the sample for which sampling has not been performed. In this case, an analysis for an item for a sampled sample continues to be performed. In contrast, an analysis for a remaining item whose sampling has not been performed is cancelled, and the process proceeds to the cleaning operation. When the foreign material cannot be removed from the sample probe by the automatic cleaning operation, the sampling is stopped. The result of the measurement of an item for which the measurement is in progress is output. After that, the automatic analyzer assumes a standby state. In this case, only a sample for which the alarm indicative of detection of clogging of a sample probe is generated is required to be treated. The automatic analyzer is in the state where the analyzer cannot sample a sample. Thus, the automatic analyzer is stopped and recovered.

The sample treated in the case (4) is registered in the measurement result screen 1. The status field for the sample treated in the case (4) indicates "trouble", The operator selects the sample treated in the case (4) on the measurement result screen 1 and presses the re-measurement button 5. Then, the re-measurement request screen 9 is displayed. The re-measurement request screen 9 shows items (shown in Fig. 9) of operations in a flow format. The items of operations are to be performed by the operator or to be performed by the automatic analyzer. The operator extracts the sample probe in accordance with the guidance and manually removes the foreign material from the sample probe. In addition, the operator performs maintenance such as air purge and adjustment of the position of the probe. After that, the operator resets to the automatic analyzer a sample that is not yet measured and operates the automatic analyzer to cause the automatic analyzer to perform a re-measurement.

The results of the re-measurement are output and stored in the database dedicated for a sample accompanied by an unusual condition. This database is different from the database that is dedicated for a normal sample and designed to store a sample normally treated. The output results are displayed on the measurement result screen 1. The results of the measurement of the samples, which are confirmed and approved by the administrator, are transferred into the database dedicated for a normal sample and output to the external computer in real time or collectively. The automatic analyzer records therein unusual conditions shown in Fig. 9 such as the alarm and the maintenance by using, as a trigger, the detection of the clogging of the sample probe. The unusual conditions are displayed on the special treatment trace screen 10.

In the flow shown in Fig. 9, the performance for searching a sample subjected to the special treatment is improved in a similar way to the aforementioned examples. In addition, reliability of the automatic analyzer is improved by the processes for the confirmation and approval. Furthermore, traceability of the automatic analyzer is ensured by recording the contents of the special treatment for the unusual condition.

### (5) In the case where an alarm indicative of a lack of reagent is generated

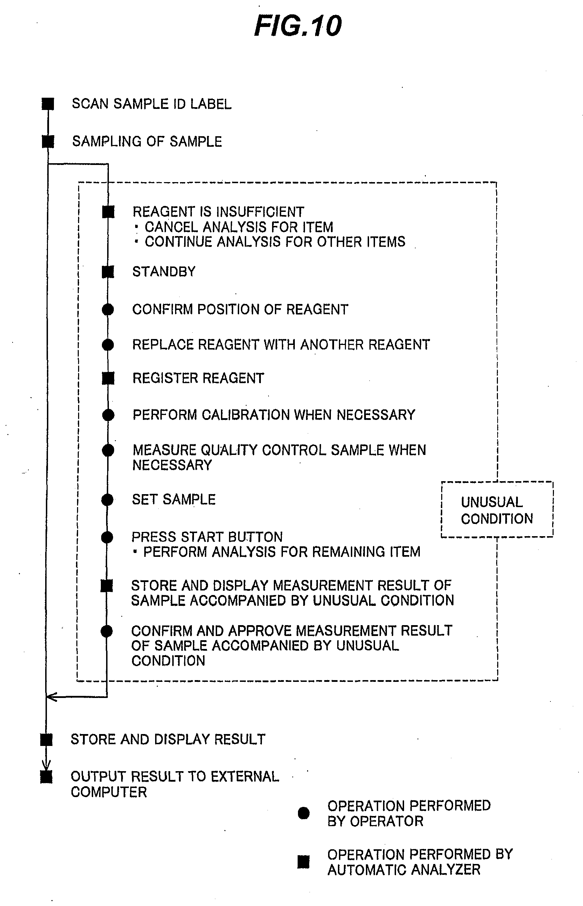

Fig. 10 shows a flow of a process that is to be performed in the case (5). When the remaining amount of the reagent is zero during sampling of a sample, the automatic analyzer adds the alarm indicative of the lack of the reagent to an item indicative of the sampling of the sample for samples that are to be measured next to the sample. An analysis for an item other than the above item continues to be performed. However, an analysis for the item indicative of the sampling of the sample is cancelled. After measurements are performed for all items other than the abovementioned item, the automatic analyzer assumes the standby state. In this case, although only the item for which the amount of the reagent is insufficient is required to be solved, the reagent cannot be replaced during the operation of the automatic analyzer. Thus, the mode of the automatic analyzer is changed from an operation mode to a standby mode, and then the operator recovers the automatic analyzer to the operation mode.

The sample for which the alarm indicative of the lack of the reagent is generated is registered in the measurement result screen 1. The status field for the sample treated in the case (5) indicates "trouble". The operator selects the sample treated in the case (5) on the measurement result screen 1 and presses the re-measurement button 5. Then, the re-measurement request screen 9 is displayed. The re-measurement request screen 9 shows items (shown in Fig. 10) of operations in a flow format. The items of operations are to be performed by the operator or to be performed by the automatic analyzer. The operator confirms the position of the reagent used for the abovementioned item and replaces a reagent bottle containing the reagent with a new reagent bottle in accordance with the guidance. The automatic analyzer registers the reagent therein and recognizes the position of the new reagent bottle. After that, the automatic analyzer calibrates the position of the new reagent bottle and measures a quality control sample when necessary. Then, the automatic analyzer sets the sample and measures the sample for a remaining item.

The results of the measurement are output and stored in the database dedicated for a sample accompanied by an unusual condition. This database is different from the database that is dedicated for a normal sample and designed to store a sample normally treated. The output measurement results are displayed on the measurement result screen 1. The measurement results of the sample, which are confirmed and approved by the administrator, are transferred into the database dedicated for a normal sample and output to the external computer in real time or collectively. The automatic analyzer records therein unusual conditions shown in Fig. 10 such as the contents of the alarm and the registration of the reagent by using, as a trigger, the generation of the alarm indicative of the lack of the reagent. The unusual conditions are displayed on the special treatment trace screen 10.

In the flow shown in Fig. 10, the performance for searching a sample subjected to the special treatment is improved in a similar way to the abovementioned examples. In addition, reliability of the automatic analyzer is improved by the processes for the confirmation and approval. Furthermore, traceability of the automatic analyzer is ensured by recording the contents of the special treatment for the unusual condition.

The foregoing description discloses that the measurement results of each of the samples subjected to the special treatment for the unusual conditions are displayed on the measurement result screen dedicated for a sample subjected to a special treatment. The samples subjected to the special treatment may be distinguished from normally treated samples by adding identification marks to the samples subjected to the special treatment. In addition, the samples subjected to the special treatment may be distinguished from normally treated samples by adding, to the samples subjected to the special treatment, marks that are different based on the unusual conditions. In the foregoing description, the occurrences of the unusual conditions are determined by the generations of the alarms. Alternatively, the operator may register any sample as a sample accompanied by an unusual condition and register any item as a special item to ensure that the sample is determined to be in an unusual condition.

### List of reference signs

- 1: measurement result screen
- 4: confirmation button
- 5: re-measurement button
- 6: approval button
- 8: content confirmation button
- 9: re-measurement request screen
- 10: special treatment trace screen

## Claims

1. An automatic analyzer comprising:
an analyzer for analysing a sample in accordance with a first analysis item and in response to a first request for a normal treatment; and
a controller for associating measurement data and for storing the measurement data on the sample analysed,
wherein the controller is configured to associate, with identification information used to identify a sample subjected to a special treatment for an unusual condition, the measurement data on the sample analysed by the analyzer in accordance with the first analysis item and in response to a second request that is a request for re-examination, is different from the first request and is made for the special treatment for an unusual condition,
to store the measurement data associated with the identification information used to identify a sample in a database dedicated for a normal sample, to further associate the measurement data on the sample analysed by the analyzer in response to the second request with a content of the special treatment for an unusual condition, and
to store the measurement data associated with the sample accompanied by an unusual condition as a sample accompanied by an unusual condition with the content of the special treatment,
**characterized in that**
a re-measurement request screen (9) is provided to show procedures of special treatment to be performed by an operator before re-measurement in the case where the sample accompanied by the unusual condition is treated without a suspension of the automatic analyzer; that
the analyzer is configured to perform a re-measurement after the procedures of special treatment have been performed on the sample; that
the controller is configured to store the procedures of special treatment and times which are stored by the operator when the procedures of special treatment have been performed in a database dedicated for a sample accompanied by an unusual condition, and that
a special treatment trace screen (10) is provided to display the times which are stored by the operator and to display the contents of the procedures of special treatment accompanying an unusual condition.

2. The automatic analyzer according to claim 1, **characterized in that** the first and second requests are made by using measurement numbers different from each other.

3. The automatic analyzer according to claim 1 or 2, **characterized in that** the first and second requests are made by using sample identification codes different from each other.

4. The automatic analyzer according to anyone of the preceding claims, **characterized in that** the analysis is performed by the analyzer in response to the second request and in accordance with a second analysis item different from the first analysis item.

5. The automatic analyzer according to anyone of the preceding claims, **characterized by** further comprising an output device for outputting only the measurement data on the sample analysed by the analyzer in response to the second request.

6. The automatic analyzer according to anyone of the preceding claims, **characterized in that** the result of the analysis performed on the sample subjected to the special treatment and output from the output device includes a content of an unusual condition.

7. The automatic analyzer according to anyone of the preceding claims, **characterized by** further comprising a button for instructing the automatic analyzer to perform a re-analysis for each of the analysis items.

8. The automatic analyzer according to anyone of the preceding claims, **characterized by** further comprising a button for instructing the automatic analyzer to perform at least one of a process for confirming the result of the analysis and a process for approving the result of the analysis.

9. The automatic analyzer according to anyone of the preceding claims, **characterized in that** the output device outputs a method to perform an analysis on a sample accompanied by an unusual condition.

10. The automatic analyzer according to anyone of the preceding claims, **characterized in that** the unusual condition includes at least one of a lack of a reagent, clogging of a sample probe, a failure to read a barcode, a lack of the sample, a calibration error, a quality control error, and an expiration of the reagent.

11. The automatic analyzer according to anyone of the preceding claims, **characterized by** further comprising a button for registering a sample subjected to the special treatment by an operator.

12. The automatic analyzer according to claim 1, **characterized in that** the analyzer transfers the measurement result of the sample accompanied by an unusual condition into the database dedicated for a normal sample, when an approval button displayed on the screen is pressed.

## Patentansprüche

1. Automatisches Analysegerät, umfassend
ein Analysegerät zum Analysieren einer Probe gemäß einer ersten Analyseposition und als Reaktion auf eine erste Anforderung für eine normale Behandlung; und
eine Steuereinheit zum Zuordnen von Messdaten und zum Speichern der Messdaten der analysierten Probe,
wobei die Steuereinheit konfiguriert ist
zum Verknüpfen - mit Identifizierungsdaten, die zur Identifizierung einer Probe verwendet werden, welche einer Sonderbehandlung aufgrund eines außergewöhnlichen Zustands unterzogen wurde - der Messdaten der Probe, die von dem Analysegerät gemäß der ersten Analyseposition und als Reaktion auf eine zweite Anforderung analysiert wurde, wobei letztere eine Anforderung für eine erneute Untersuchung ist, sich von der ersten Anforderung unterscheidet und für die Sonderbehandlung aufgrund eines außergewöhnlichen Zustands erfolgt,
zum Speichern der mit den Identifizierungsdaten zur Identifizierung einer Probe verknüpften Messdaten in einer dedizierten Datenbank für eine normale Probe,
zum weiteren Verknüpfen der Messdaten der von dem Analysegerät als Reaktion auf die zweite Anforderung analysierten Probe mit einem Inhalt der Sonderbehandlung aufgrund eines außergewöhnlichen Zustands, und
zum Speichern der der Probe, bei der ein außergewöhnlicher Zustand aufgetreten ist, zugeordneten Messdaten als Probe, bei der ein außergewöhnlicher Zustand aufgetreten ist, mit dem Inhalt der Sonderbehandlung,
**dadurch gekennzeichnet, dass**
ein Messungswiederholungsanforderungsbildschirm (9) bereitgestellt wird, um Sonderbehandlungsverfahren aufzuzeigen, die von einer Bedienungsperson vor einer Messungswiederholung durchzuführen sind, für den Fall, dass die Probe, bei der der außergewöhnliche Zustand aufgetreten ist, ohne Unterbrechung des automatischen Analysegeräts behandelt wird; dass das Analysegerät zur Durchführung einer Messungswiederholung nach Durchführung der Sonderbehandlungsverfahren bei der Probe konfiguriert ist; dass die Steuereinheit konfiguriert ist, die von der Bedienungsperson nach Durchführung der Sonderbehandlungsverfahren abgespeicherten Sonderbehandlungsverfahren und -zeiten in einer dedizierten Datenbank für eine Probe, bei der ein außergewöhnlicher Zustand aufgetreten ist, zu speichern, und dass ein Sonderbehandlungsverfolgungsbildschirm (10) bereitgestellt wird, auf dem die von der Bedienungsperson abgespeicherten Zeiten sowie der Inhalt der Sonderbehandlungsverfahren für einen außergewöhnlichen Zustand angezeigt werden.

2. Automatisches Analysegerät nach Anspruch 1, **dadurch gekennzeichnet, dass** die erste und zweite Anforderung unter Verwendung jeweils unterschiedlicher Messungsnummern gestellt werden.

3. Automatisches Analysegerät nach Anspruch 1 oder 2, **dadurch gekennzeichnet, dass** die erste und zweite Anforderung unter Verwendung jeweils unterschiedlicher Probenidentifizierungscodes gestellt werden.

4. Automatisches Analysegerät nach einem der vorhergehenden Ansprüche, **dadurch gekennzeichnet, dass** die Analyse von dem Analysegerät als Reaktion auf die zweite Anforderung und gemäß einer zweiten Analyseposition, die sich von der ersten Analyseposition unterscheidet, durchgeführt wird.

5. Automatisches Analysegerät nach einem der vorhergehenden Ansprüche, **gekennzeichnet dadurch, dass** es des Weiteren ein Ausgabegerät zur Ausgabe ausschließlich der Messdaten der Probe, die von dem Analysegerät als Reaktion auf die zweite Anforderung analysiert wurde, umfasst.

6. Automatisches Analysegerät nach einem der vorhergehenden Ansprüche, **dadurch gekennzeichnet, dass** das von dem Ausgabegerät ausgegebene Ergebnis der Analyse des der Sonderbehandlung unterzogenen Probe einen Inhalt eines außergewöhnlichen Zustands enthält.

7. Automatisches Analysegerät nach einem der vorhergehenden Ansprüche, **gekennzeichnet dadurch, dass** es des Weiteren eine Taste umfasst, mit der das automatische Analysegerät angewiesen wird, für jede der Analysepositionen eine erneute Analyse durchzuführen.

8. Automatisches Analysegerät nach einem der vorhergehenden Ansprüche, **gekennzeichnet dadurch, dass** es des Weiteren eine Taste umfasst, mit der das automatische Analysegerät angewiesen wird, zumindest entweder einen Prozess zur Bestätigung des Analyseergebnisses oder einen Prozess zur Annahme des Analyseergebnisses durchzuführen.

9. Automatisches Analysegerät nach einem der vorhergehenden Ansprüche, **dadurch gekennzeichnet, dass** das Ausgabegerät ein Verfahren zur Durchführung einer Analyse einer Probe, bei der ein außergewöhnlicher Zustand aufgetreten ist, ausgibt.

10. Automatisches Analysegerät nach einem der vorhergehenden Ansprüche, **dadurch gekennzeichnet, dass** der außergewöhnliche Zustand zumindest einen der folgenden einschließt: fehlendes Reagens, verstopfte Probensonde, Unlesbarkeit eines Strichcodes, fehlende Probe, Kalibrierungsfehler, Qualitätskontrollfehler und abgelaufenes Verfallsdatum des Reagens.

11. Automatisches Analysegerät nach einem der vorhergehenden Ansprüche, **gekennzeichnet dadurch, dass** es des Weiteren eine Taste zur Registrierung einer der Sonderbehandlung unterzogenen Probe durch eine Bedienungsperson umfasst.

12. Automatisches Analysegerät nach Anspruch 1, **dadurch gekennzeichnet, dass** bei Drücken einer am Bildschirm angezeigten Annahmetaste das Analysegerät das Messergebnis der Probe, bei der ein außergewöhnlicher Zustand aufgetreten ist, in die dedizierte Datenbank für eine normale Probe überträgt.

## Revendications

1. Analyseur automatique comprenant :
un analyseur destiné à analyser un échantillon en fonction d'un premier élément d'analyse et en réponse à une première requête de traitement normal ; et
un dispositif de commande destiné à associer des données de mesure et à stocker les données de mesure sur l'échantillon analysé,
dans lequel le dispositif de commande est configuré pour
associer, à des informations d'identification servant à identifier un échantillon soumis à un traitement spécial destiné à une condition inhabituelle, les données de mesure sur l'échantillon analysé par l'analyseur en fonction du premier élément d'analyse et en réponse à une seconde requête qui est une requête de réexamen, qui est différente de la première requête et qui est établie aux fins du traitement spécial destiné à une condition inhabituelle, pour
stocker les données de mesure associées aux informations d'identification servant à identifier un échantillon dans une base de données dédiée à un échantillon normal, pour associer en outre les données de mesure sur l'échantillon analysé par l'analyseur en réponse à la seconde requête à un contenu du traitement spécial destiné à une condition inhabituelle, et pour stocker les données de mesure associées à l'échantillon s'accompagnant d'une condition inhabituelle en tant qu'échantillon s'accompagnant d'une condition inhabituelle avec le contenu du traitement spécial,
**caractérisé en ce que** :
un écran de requête de nouvelle mesure (9) est présenté pour montrer des modes opératoires de traitement spécial à mettre en oeuvre par un opérateur avant une nouvelle mesure, dans le cas où l'échantillon s'accompagnant d'une condition inhabituelle est traité sans interruption de l'analyseur automatique ;
l'analyseur est configuré pour effectuer une nouvelle mesure après que les modes opératoires de traitement spécial ont été mis en oeuvre sur l'échantillon ;
le dispositif de commande est configuré pour stocker les modes opératoires de traitement spécial et les heures qui sont stockées par l'opérateur lorsque les modes opératoires de traitement spécial ont été mis en oeuvre, dans une base de données dédiée à un échantillon s'accompagnant d'une condition inhabituelle, et
un écran de traçage de traitement spécial (10) est présenté pour afficher les heures qui sont stockées par l'opérateur et pour afficher le contenu des modes opératoires du traitement spécial accompagnant une condition inhabituelle.

2. Analyseur automatique selon la revendication 1, **caractérisé en ce que** les première et seconde requêtes sont établies à l'aide de numéros de mesure différents l'un de l'autre.

3. Analyseur automatique selon la revendication 1 ou 2, **caractérisé en ce que** les première et seconde requêtes sont établies à l'aide de codes d'identification d'échantillon différents l'un de l'autre.

4. Analyseur automatique selon l'une quelconque des revendications précédentes, **caractérisé en ce que** l'analyse est effectuée par l'analyseur en réponse à la seconde requête et en fonction d'un second élément d'analyse différent du premier élément d'analyse.

5. Analyseur automatique selon l'une quelconque des revendications précédentes, **caractérisé en ce qu'**il comprend en outre un dispositif de sortie destiné à ne délivrer que les données de mesure sur l'échantillon analysé par l'analyseur en réponse à la seconde requête.

6. Analyseur automatique selon l'une quelconque des revendications précédentes, **caractérisé en ce que** le résultat de l'analyse effectuée sur l'échantillon soumis au traitement spécial et délivré par le dispositif de sortie inclut un contenu de condition inhabituelle.

7. Analyseur automatique selon l'une quelconque des revendications précédentes, **caractérisé en ce qu'**il comprend en outre un bouton destiné à donner à l'analyseur automatique l'instruction d'effectuer une nouvelle analyse pour chacun des éléments d'analyse.

8. Analyseur automatique selon l'une quelconque des revendications précédentes, **caractérisé en ce qu'**il comprend en outre un bouton destiné à donner à l'analyseur automatique l'instruction d'exécuter au moins un processus parmi un processus de confirmation du résultat de l'analyse et un processus d'approbation du résultat de l'analyse.

9. Analyseur automatique selon l'une quelconque des revendications précédentes, **caractérisé en ce que** le dispositif de sortie délivre une méthode pour effectuer une analyse sur un échantillon s'accompagnant d'une condition inhabituelle.

10. Analyseur automatique selon l'une quelconque des revendications précédentes, **caractérisé en ce que** la condition inhabituelle inclut au moins une condition parmi un manque de réactif, un colmatage de sonde à échantillons, une non-lecture de code à barres, une absence de l'échantillon, une erreur d'étalonnage, une erreur de contrôle de la qualité et une expiration de durée de vie du réactif.

11. Analyseur automatique selon l'une quelconque des revendications précédentes, **caractérisé en ce qu'**il comprend en outre un bouton destiné à enregistrer un échantillon soumis au traitement spécial par un opérateur.

12. Analyseur automatique selon la revendication 1, **caractérisé en ce que** l'analyseur transfère le résultat de mesure de l'échantillon s'accompagnant d'une condition inhabituelle dans la base de données dédiée à un échantillon normal, lorsqu'un bouton d'approbation affiché à l'écran est pressé.
